Europäisches Patentamt

European Patent Office

Office européen des brevets

(11) Numéro de publication : **0 275 758 B1**

(12) **FASCICULE DE BREVET EUROPEEN**

(45) Date de publication du fascicule du brevet :
05.06.91 Bulletin 91/23

(51) Int. Cl.⁵ : **F24F 12/00**

(21) Numéro de dépôt : **87402880.6**

(22) Date de dépôt : **16.12.87**

(54) **Unité indépendante d'échange de chaleur entre un fluide primaire et un fluide secondaire, en particulier de l'air pour la ventilation et la climatisation d'un local.**

(30) Priorité : **17.12.86 FR 8617714**

(43) Date de publication de la demande :
**27.07.88 Bulletin 88/30**

(45) Mention de la délivrance du brevet :
**05.06.91 Bulletin 91/23**

(84) Etats contractants désignés :
**AT BE CH DE ES FR GB GR IT LI LU NL SE**

(56) Documents cités :
**DE-A- 3 327 685**
**DE-A- 3 329 557**

(73) Titulaire : **Rylewski, Eugeniusz Michal**
**43bis, avenue du Général Leclerc**
**F-78470 Saint Remy les Chevreuse (FR)**

(72) Inventeur : **Rylewski, Eugeniusz Michal**
**43bis, avenue du Général Leclerc**
**F-78470 Saint Remy les Chevreuse (FR)**

(74) Mandataire : **Netter, André**
**Cabinet NETTER, 40, rue Vignon**
**F-75009 Paris (FR)**

Jouve, 18, rue Saint-Denis, 75001 PARIS

## Description

Unité indépendante d'échange de chaleur entre un fluide primaire et un fluide secondaire, en particulier de l'air pour la ventilation et la climatisation d'un local

L'invention concerne une unité indépendante d'échange de chaleur entre un fluide primaire et un fluide secondaire, en particulier de l'air pour la ventilation et la climatisation d'une pièce ou d'un local dans un bâtiment, cette unité étant également susceptible de fonctionner en collecteur solaire, ainsi qu'en échangeur de chaleur eau-eau, par exemple pour la récupération de la chaleur des eaux domestiques avant leur rejet à l'égoût.

On connaît déjà des unités indépendantes de ventilation ou de climatisation d'une pièce ou d'un local, qui comprennent un échangeur de chaleur d'un type classique entre l'air extérieur introduit dans la pièce et l'air intérieur qui est rejeté au dehors. Ces échangeurs ont un rendement très faible et s'encrassent rapidement de sorte qu'ils deviennent vite pratiquement inutilisables. Il est à peu près impossible de les nettoyer correctement, même en utilisant de l'air comprimé ou des acides. Ils sont en outre associés à des ventilateurs tournant à vitesse élevée pour assurer un débit d'air suffisant à travers l'échangeur, qui consomment de l'énergie et qui sont particulièrement bruyants, de sorte que leur installation dans un bureau ou dans une chambre est très mal acceptée.

On connaît également des unités indépendantes de climatisation basées sur le principe de la pompe à chaleur. Ces unités ont toutefois un prix de revient très élevé et souffrent des inconvénients liés au principe même de la pompe à chaleur. De plus, elles n'assurent pas une ventilation de la pièce ou du local dans lequel elles sont installées.

On connaît par ailleurs, d'après le document DE-A-3 327 685, une unité indépendante d'échange de chaleur entre un fluide primaire et un fluide secondaire, en particulier de l'air pour la ventilation et la climatisation d'un local ou d'une pièce dans un bâtiment, comprenant un échangeur de chaleur traversé par le fluide primaire et par le fluide secondaire et au moins un organe de mise en circulation de fluide dans l'échangeur, dans laquelle l'échangeur se présente sous forme d'un caisson parallélépipédique comprenant des parois sensiblement parallèles dont l'une au moins est facilement amovible, ces parois délimitant entre elles deux passages de fluide sensiblement identiques dans lesquels circulent à contre-courant le fluide primaire et le fluide secondaire, ces passages de fluide ayant en section une forme ondulée.

Dans cette unité connue, l'une des parois est une feuille métallique pliée qui définit une multiplicité de canaux d'écoulement pour le fluide primaire et pour le fluide secondaire. Il en résulte que cette feuille métallique, bien qu'étant amovible, est difficile à nettoyer. De plus, cette unité connue nécessite des ventilateurs tournant à vitesse élevée.

L'invention a pour objet une unité indépendante de ventilation et de climatisation d'une pièce ou d'un local, quine présente pas les inconvénients précités et, notamment, qui a un prix de revient très faible, qui est d'une grande fiabilité, qui fonctionne sans bruit avec un rendement élevé et dont l'installation, la maintenance et l'entretien sont particulièrement simples et faciles à réaliser.

L'invention propose à cet effet une unité indépendante d'échange de chaleur entre un fluide primaire et un fluide secondaire, du type décrit dans le document précité, qui est caractérisée en ce que les sections de passage de fluide dans l'échangeur sont telles que la vitesse de circulation du fluide y est faible et inférieure à environ 1 mètre par seconde en utilisation normale, et en ce que chaque passage de fluide comprend des éléments allongés, générateurs de turbulences, disposés entre deux parois définissant le passage.

Une telle unité est capable d'assurer un débit d'air compris entre 20 et 40 m3 par heure environ et donc d'assurer une ventilation très satisfaisante d'une pièce ou d'un local de dimensions normales, lorsqu'elle est associée à un ventilateur volumétrique ou dynamique tournant à faible vitesse (par exemple de l'ordre de 500 à 800 tours par minute pour un ventilateur volumétrique et de 1200 tours par minute environ pour un ventilateur dynamique axial) le bruit de fonctionnement du ventilateur étant alors à peu près inaudible.

L'échange de chaleur entre l'air primaire et l'air secondaire s'effectue habituellement avec un rendement supérieur à 60% et, en général, compris entre 75 et 80% de sorte que l'air extérieur introduit dans la pièce est, selon les cas, refroidi ou réchauffé par l'air intérieur destiné à être rejeté au dehors, la ventilation de la pièce s'effectuant ainsi sans provoquer de changement notable de température à l'intérieur de la pièce.

Il en résulte, par temps froid, une économie importante de chauffage, de l'ordre de 25 à 30%, car la ventilation d'une pièce est assurée en permanence sans qu'il soit nécessaire d'ouvrir les fenêtres et de laisser l'air chaud de la pièce s'échapper pour être remplacé par de l'air extérieur froid qu'il faut ensuite chauffer à la température désirée.

L'invention présente également des avantages importants par temps chaud, car l'air extérieur est refroidi avant d'être introduit dans la pièce, par échange de chaleur avec l'air de la pièce qui est rejeté au dehors.

De plus, comme les passages de fluide dans l'échangeur ont en section une forme ondulée, l'air extérieur qui est introduit dans la pièce après passage dans l'échangeur est dépoussiéré de façon importante, les poussières se déposant sur les ondulations du passage de fluide correspondant.

Du fait que chaque passage de fluide comprend des éléments allongés générateurs de turbulences, on améliore ainsi l'échange de chaleur entre le fluide primaire et le fluide secondaire, qui s'effectue à la fois par conduction et par convection.

De façon avantageuse, ces éléments allongés générateurs de turbulences s'étendent en travers des ondulations précitées, chaque élément générateur de turbulences étant de préférence en contact avec les sommets d'au moins certaines des ondulations d'une paroi et d'au moins certaines des ondulations de l'autre paroi.

Selon une autre caractéristique de l'invention, ces passages de fluide sont accessibles de l'extérieur sur sensiblement toute leur surface, en particulier pour permettre leur nettoyage, grâce au fait que les parois précitées sont facilement amovibles ou montées à pivotement autour d'un de leurs côtés.

Il suffit donc d'ouvrir le caisson constitué par l'unité selon l'invention pour avoir accès à toute la surface des passages de fluide, ce qui permet de les nettoyer très facilement et de retirer la poussière, les graisses, etc, qui s'y sont accumulées.

En outre, les surfaces en regard des parois délimitant les passages de fluide peuvent avoir une couleur favorisant l'absorption et l'émission de chaleur, pour augmenter l'échange de chaleur par rayonnement entre le fluide primaire et le fluide secondaire.

Dans un mode de réalisation particulier, l'unité selon l'invention se présente sous forme d'un caisson ayant une hauteur d'environ 1,3 mètre, une largeur de l'ordre de 80 centimètres à 1 mètre et une épaisseur d'environ 15 centimètres, ce caisson étant disposé contre la face interne d'un mur extérieur ou perpendiculairement à cette face interne, les passages de fluide étant à orientation générale verticale et communiquant à leur extrémité supérieure avec l'intérieur de la pièce et, à leur extrémité inférieure, avec l'extérieur de la pièce par l'intermédiaire d'un conduit traversant le mur extérieur.

Dans une forme de réalisation, l'unité comprend trois parois parallèles dont l'une est accolée au mur.

De préférence, une couche de matière thermiquement isolante est disposée entre le mur et la paroi correspondante de l'unité et une couche de matière isolante recouvre la face de la paroi de l'unité qui est tournée vers l'intérieur de la pièce.

Dans une autre forme de réalisation, l'unité comprend deux parois parallèles, le rôle de la troisième paroi étant joué pour le mur.

Des moyens de chauffage, de refroidissement, de séchage ou d'humidification de l'air peuvent être prévus dans le caisson à une extrémité des passages d'air, selon les cas.

Dans la description qui suit, faite à titre d'exemple, on se réfère aux dessins annexés, dans lesquels :

– la figure 1 est une vue schématique en perspective d'une unité de ventilation et de climatisation selon l'invention, représentée ouverte ;
– les figures 2 et 3 sont des vues en coupe transversale verticale de cette unité ;
– la figure 4 représente cette unité en perspective, sa deuxième paroi étant également ouverte;
– la figure 5 est une vue correspondant à la figure 4, mais pour une variante de réalisation de l'invention ;
– la figure 6 est une vue en coupe transversale verticale d'une variante de réalisation d'une unité selon l'invention ;
– la figure 7 est une vue en perspective d'une autre variante de réalisation d'une unité selon l'invention, celle-ci étant représentée complètement ouverte ;
– la figure 8 est une vue simplifiée en perspective d'une autre variante de réalisation d'une unité selon l'invention ;
– la figure 9 est une vue schématique en coupe transversale d'une unité selon l'invention, utilisée comme hotte de cuisine ;
– la figure 10 est une vue en perspective d'une autre variante d'une unité selon l'invention, représentée complètement ouverte ;
– la figure 11 est en vue en perspective d'une autre forme de réalisation de l'unité selon l'invention.

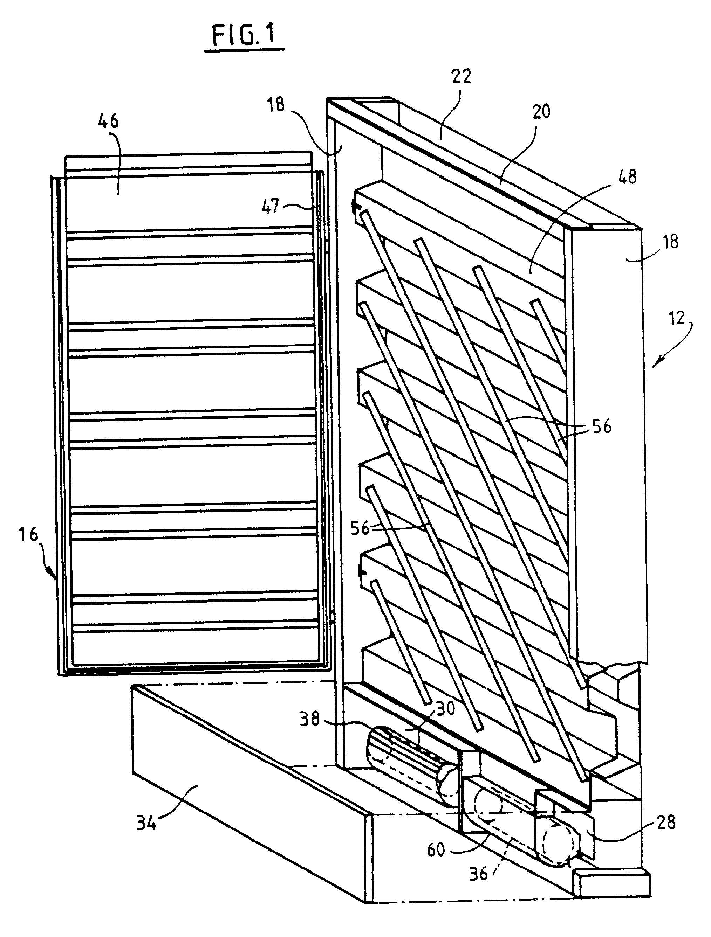

On se réfère d'abord aux figures 1 à 4 représentant une unité de ventilation et de climatisation selon l'invention, destinée à être montée dans une pièce ou un local d'un bâtiment, par exemple contre la face interne d'un mur extérieur 10.

Cette unité se présente sous forme d'un caisson parallélépipédique 12 ayant une hauteur de l'ordre de 1,3 mètre, dans cet exemple, une largeur de l'ordre de 80 centimètres à 1 mètre, et une épaisseur de 15 à 20 centimètres.

Ce caisson 12 comprend une grande paroi arrière 14, appliquée sur la face intérieure du mur 10, une grande paroi avant 16, qui est facilement amovible ou montée à pivotement autour d'un de ses côtés verticaux sur le caisson 12, deux parois latérales verticales 18, une paroi horizontale supérieure 20 comprenant un orifice 22 de passage d'air, et une paroi horizontale inférieure 24 dont une partie peut former une trappe amovible ou pivotante, comme on le verra dans ce qui suit.

Le mur extérieur 10 est traversé par un conduit horizontal 26, par exemple, à section rectangulaire, qui débouche dans la partie inférieure du caisson 12 et qui est partagé en deux compartiments 28 et 30 de mêmes dimensions par une cloison verticale 32. Les deux compartiments 28 et 30 ainsi que la cloison verticale 32 se prolongent horizontalement à l'intérieur du caisson 12 et sont fermés, sur la face avant de ce caisson, par une plaque verticale 34, fixée par exemple de façon amovible sur l'extrêmité inférieure des parois latérales 18 du caisson.

Chaque compartiment 28, 30 contient un ventilateur 36, 38 respectivement, tel qu'un ventilateur volumétrique à axe de rotation horizontal, qui sont entraînés dans des sens de rotation opposés par les mêmes moyens moteurs, par exemple un moteur électrique ou éventuellement un mécanisme d'horlogerie à contre-poids.

Au-dessus des compartiments 28 et 30, le caisson 12 comprend deux passages d'air 40, 42 qui s'étendent sur toute la largeur du caisson et jusqu'à l'extrêmité supérieure de celui-ci, le passage 40 communiquant avec le compartiment 28 à son extrêmité inférieure et débouchant à son extrêmité supérieure à l'extérieur du caisson par un orifice 44 formé entre la cloison horizontale supérieure 20 du caisson et l'extrêmité supérieure de la paroi avant 16 de celui-ci, tandis que le passage 42 communique avec le compartiment 30 à son extrêmité inférieure et avec l'orifice 22 à son extrêmité supérieure.

Ces passages d'air 40 et 42 sont délimités par les parois latérales 18 du caisson, d'une part, et par trois plaques ondulées sensiblement parallèles 46, 48 et 50, d'autre part.

La plaque ondulée 46 est fixée sur la face interne de la paroi avant 16 du caisson et présente des ondulations horizontales à section trapézoïdale. Cette plaque 46 peut être montée à l'intérieur d'un cadre rectangulaire 47, facilitant son montage à pivotement le long d'un de ses bords verticaux et sa face externe est revêtue d'une couche de matière isolante 49, remplissant par exemple les creux des ondulations, qui est elle-même recouverte par un panneau d'aspect 52 formant la face externe de la paroi avant 16 du caisson.

La plaque intermédiaire 48 est également une plaque à ondulations horizontales ayant une section trapézoïdale, qui est montée facilement amovible ou pivotante sur une paroi latérale 18 du caisson, le long d'un de ses côtés verticaux. Comme la plaque 46, la plaque intermédiaire 48 peut être montée à l'intérieur d'un cadre rectangulaire facilitant son montage à pivotement à l'intérieur du caisson.

La troisième plaque 50 présente également des ondulations horizontales à section trapézoïdale, et est fixée sur la paroi arrière 14 du caisson avec l'interposition d'une couche de matière isolante 54 qui remplit par exemple les creux des ondulations de la plaque 50.

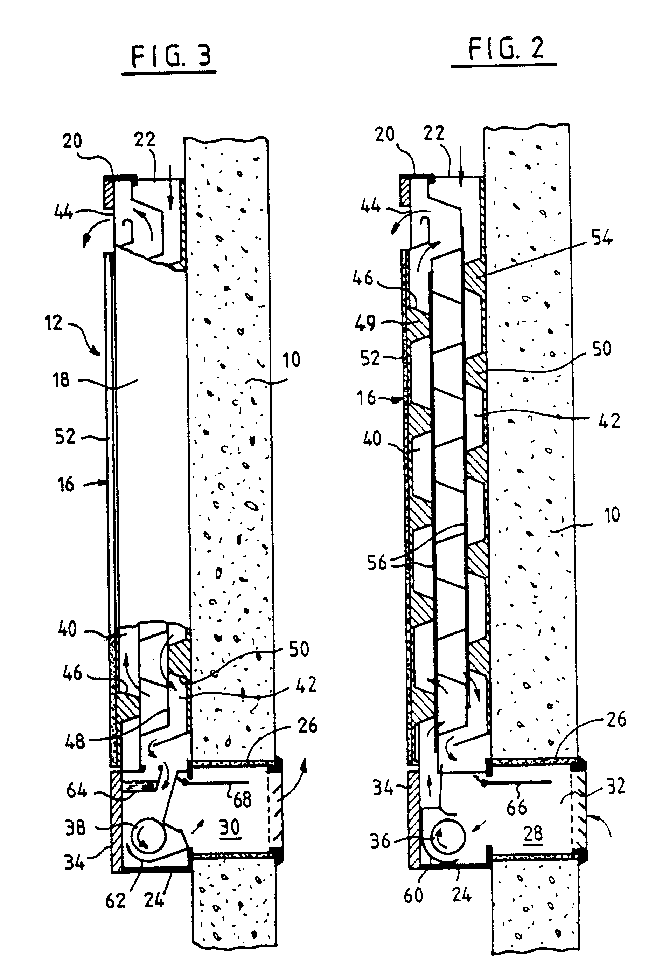

Comme on le voit dans les figures 2 et 3, les plaques ondulées 46, 48 et 50 sont disposées les unes par rapport aux autres de telle sorte que les sommets de leurs ondulations se correspondent horizontalement, les plaques n'étant pas décalées l'une par rapport à l'autre dans le sens vertical.

Les passages de fluides 40 et 42 qui sont ainsi délimités entre ces trois plaques ont une forme verticale ondulée.

De plus, chacun de ces passages de fluide comprend des éléments 56 générateurs de turbulences qui, dans l'exemple représenté, sont des barres plates de faible épaisseur, parallèles les unes aux autres et s'étendant en oblique sur les sommets des ondulations de la plaque intermédiaire 48, à égale distance les unes des autres et sur les deux faces de cette plaque intermédiaire 48. Ces barres plates 56 sont fixées, par exemple, par collage, par soudure ou par tout autre moyen approprié, sur les sommets plans des ondulations de la plaque intermédiaire 48. L'agencement est tel que, lorsque le caisson 12 est fermé, les sommets plans des ondulations de la première plaque 46 sont en contact avec les éléments 56 générateurs de turbulences et les sommets plans des ondulations de la troisième plaque 50 sont également en contact avec les éléments 56 fixés sur l'autre face de la plaque intermédiaire 48.

On précisera, à titre d'exemple, pour fixer les idées, que les ondulations de la tôle intermédiaire 48 ont une hauteur de 50 millimètres environ et que celles des tôles 46 et 50 ont une hauteur de 40 millimètres environ.

L'unité qui vient d'être décrite fonctionne de la façon suivante :

Le caisson étant fermé (comme représenté dans les figures 2 et 3), les rotors des ventilateurs volumétriques 36 et 38 sont entraînés en rotation dans des sens inverses l'un de l'autre, avec une vitesse de rotation qui est de l'ordre de 500 à 800 tours par minute.

Le rotor du ventilateur 36 tourne à l'intérieur d'une gaine 60 agencée de telle sorte que ce ventilateur aspire l'air extérieur par le compartiment 28 et le refoule dans le passage 40, d'où cet air sort par l'orifice 44 en partie supérieure de la paroi avant du caisson, comme indiqué par les flèches. Le rotor du ventilateur 38 tourne à l'intérieur d'une gaine 62 agencée de telle sorte que l'air est aspiré dans le passage 42 qui communique en partie supérieure avec l'intérieur de la pièce par l'orifice 22 et refoulé dans le compartiment 30 d'où il est rejeté à l'extérieur.

L'air introduit dans la pièce et l'air prélevé dans la pièce circulent donc à contre-courant dans les passages 40 et 42 du caisson 12. Les formes ondulées de ces passages et la présence des éléments allongés 56 favorisent un échange de chaleur à rendement élevé (de 75 à 80%) entre l'air prélevé à l'extérieur et introduit dans la pièce et l'air prélevé dans la pièce et rejeté à l'extérieur. Les éléments allongés 56 forment également un point thermique entre les plaques ondulées 46, 48 et 50.

De plus, pour favoriser encore un échange de chaleur, on prévoit que les surfaces en regard des plaques 46, 48 et 50 sont en une couleur favorisant l'absorption et l'émission de la chaleur par rayonnement.

Selon que la température extérieure est inférieure ou supérieure à la température à l'intérieur de la pièce, l'air extérieur introduit dans la pièce est chauffé, ou refroidi, à l'intérieur du caisson 12 par l'air prélevé dans la pièce et rejeté à l'extérieur.

Les dimensions des sections des passages d'air 40 et 42 sont choisies de telle sorte que la vitesse de l'air dans ces passages est inférieure à un mètre par seconde en utilisation normale et est en général égale à 0,4 ou 0,5 mètre par seconde.

Les vitesses de rotation des ventilateurs volumétriques 36 et 38 qui sont nécessaires pour obtenir ces vitesses d'écoulement d'air sont très faibles, de sorte que les ventilateurs consomment très peu d'énergie et sont pratiquement silencieux, leur bruit de fonctionnement étant à peu près inaudible dans une chambre à coucher ou dans un bureau.

Il est avantageux de prévoir une gouttière 64 à l'extrémité inférieure du passage 42 dans lequel circule l'air prélevé dans la pièce. En effet, lorsque cet air est refroidi par échange de chaleur avec l'air introduit dans la pièce, une condensation peut se produire sur les parois du passage 42 et l'eau de condensation est alors recueillie dans la gouttière 64.

Il est avantageux également que la partie de la paroi horizontale inférieure 24 du caisson 12, qui se trouve sous le ventilateur 38, comprenne ou forme une trappe pivotante 62 de façon à ce que l'air de la pièce puisse être aspiré directement par cette trappe, sans passer par le passage 42. On peut ainsi aspirer directement l'air contenu dans la pièce et le rejeter à l'extérieur, en remplaçant cet air par de l'air extérieur aspiré par le ventilateur 36 et circulant dans le passage 40 pour s'y débarrasser de ses poussières avant d'être introduit dans la pièce. L'air extérieur est ainsi admis dans la pièce sans échange de chaleur avec l'air intérieur. Cette caractéristique de fonctionnement présente un intérêt l'été ou dans les pays chauds, lorsqu'on fait fonctionner l'unité pendant la nuit pour amener de l'air frais dans une pièce dont la température est supérieure à la température extérieure. Par contre, dans la journée, la trappe sera refermée de telle sorte que l'air extérieur qui est alors à une température supérieure à celle de la pièce soit refroidi par échange de chaleur avec l'air intérieur avant d'être introduit dans la pièce.

L'entretien et le nettoyage de l'unité selon l'invention sont particulièrement simples : il suffit de déposer ou d'ouvrir par pivotement, selon les cas, la paroi avant du caisson et la plaque ondulée intermédiaire 48 pour avoir accès à toutes les surfaces des passages d'air et pour les nettoyer des poussières, des graisses, etc, qui s'y sont accumulées.

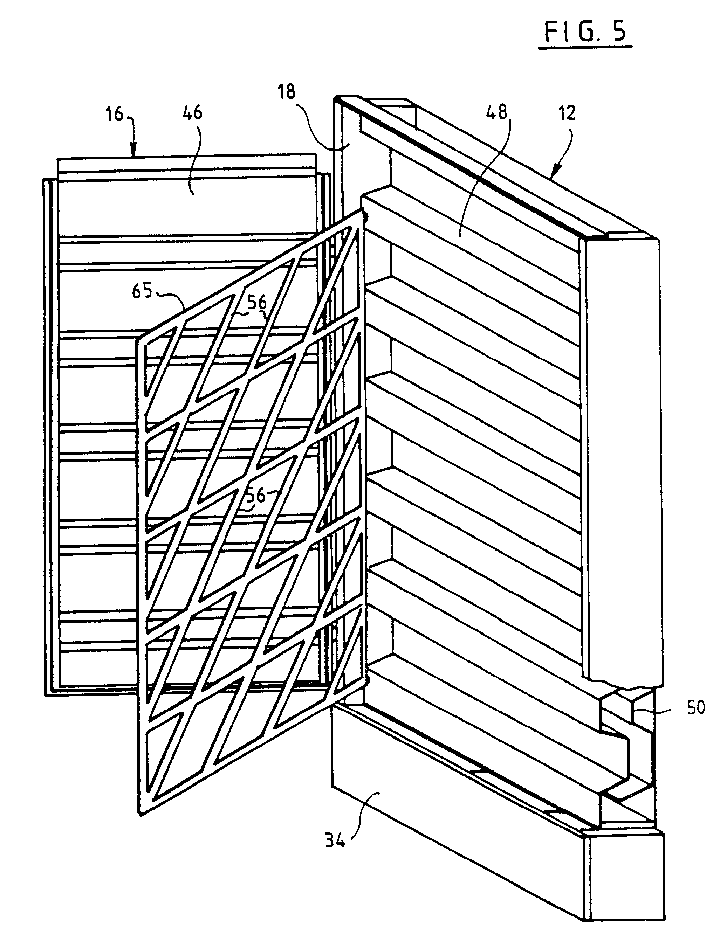

Ce nettoyage est encore facilité si l'on prévoit, comme représenté en figure 5, que les éléments allongés 56 générateurs de turbulences sont reliés entre eux par un cadre rectangulaire 65 monté à pivotement le long d'un de ses côtés verticaux sur une paroi latérale 18 du caisson 12 ou sur la plaque ondulée intermédiaire 48.

On peut également prévoir, comme représenté dans les figures 2 et 3, des volets pivotants 66 et 68 dans les compartiments 28 et 30 respectivement, pour fermer à étanchéité le conduit 26 traversant le mur extérieur 10 lorsque l'unité de ventilation et de climatisation n'est pas utilisée.

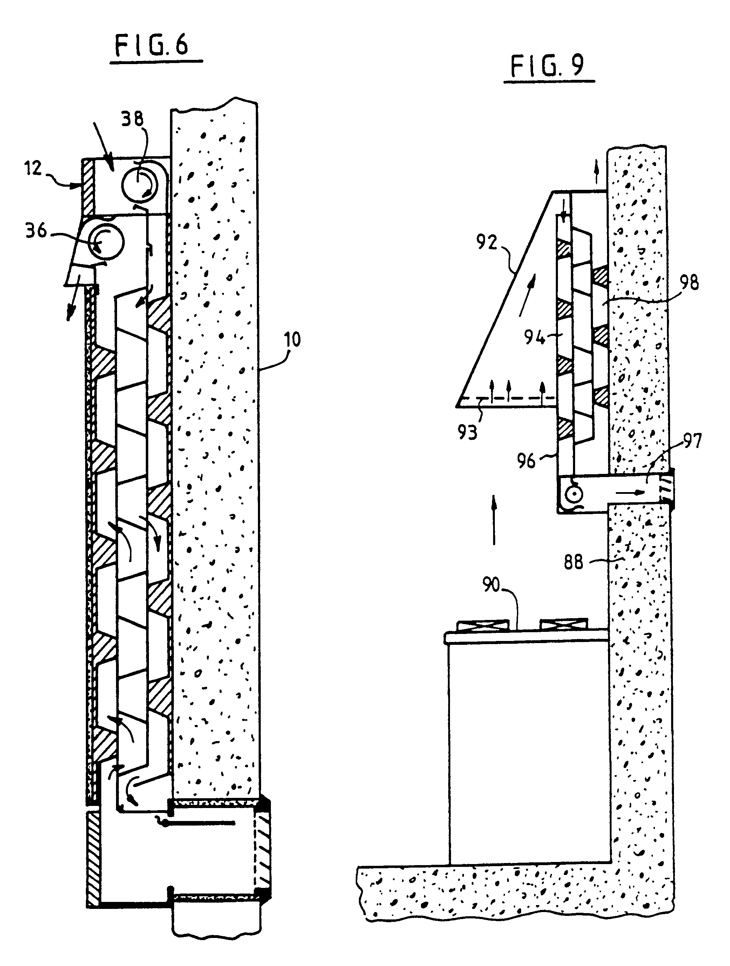

On se réfère maintenant à la figure 6, représentant une variante de réalisation de l'invention, selon laquelle les ventilateurs 36 et 38 sont montés en partie supérieure du caisson 12, au lieu d'être en partie inférieure. Pour le reste, la structure et le fonctionnement de cette variante de réalisation de l'invention sont identiques à ceux de l'unité représentée dans les figures 1 à 4.

On se réfère maintenant à la figure 7, représentant une autre variante de réalisation de l'invention, dans laquelle les plaques 46 et 50 à ondulations horizontales sont remplacées par des plaques 70 et 72 à ondulations verticales, la plaque intermédiaire 48 n'étant pas modifiée et présentant toujours des ondulations horizontales. Les éléments générateurs de turbulences peuvent être, dans ce cas, des barres obliques 74 disposées en travers de chaque ondulation de la plaque 70 (ou 72 respectivement) et fixées aux parois de ces ondulations.

Par ailleurs, les éléments générateurs de turbulences pourraient également être disposés en oblique en travers des ondulations horizontales de la plaque intermédiaire 48 et présenteraient alors une partie en saillie destinée à s'encastrer partiellement dans les ondulations verticales des plaques 70 et 72.

On se réfère maintenant à la figure 8, qui représente schématiquement une autre variante de réalisation de l'invention. Dans cette variante, les plaques ondulées 46 et 50 représentées aux figures 1 à 4 sont remplacées par des plaques planes 76 et 78 munies sur une de leurs faces de plaquettes 80, 82 respectivement qui sont parallèles entre elles et perpendiculaires à la plaque 76, 78 et qui s'engagent dans les ondulations horizontales à section rectangulaire d'une plaque intermédiaire 84.

Entre les plaquettes 80 (et 82 respectivement) de la plaque 76 (ou 78 respectivement) sont interposés des bandelettes 86 qui s'étendent en oblique et qui viennent s'appliquer sur les sommets des ondulations de la plaque intermédiaire 84 lorsque le caisson est refermé.

La figure 9 représente schématiquement, en coupe transversale verticale, une application de l'invention à une hotte de cuisine, montée sur un mur extérieur 88 au-dessus d'une table de cuisson 90. La hotte proprement dite 92 comprend, de façon usuelle, un filtre 93 à sa partie inférieure, destiné à recueillir une partie des graisses transportées par les fumées et les vapeurs de cuisson.

En partie supérieure, la hotte 92 communique avec un passage d'air 94 d'une unité 96 selon l'invention, dont la partie inférieure est reliée à un conduit 97 traversant le mur extérieur et comprenant deux compartiments, dont l'un est relié au passage d'air 94 et dont l'autre est relié à l'autre passage d'air 98 de l'unité 96, ce passage 98 débouchant à l'intérieur de la pièce à son extrémité supérieure.

On comprend que les fumées et les vapeurs de cuisson sont aspirées à l'intérieur de la hotte 92, circulent dans le passage 94 et sont rejetées à l'extérieur par le conduit 97, tandis que l'air extérieur est admis dans l'unité 96, circule dans le passage 98 et se réchauffe par échange de chaleur avec les fumées et vapeurs de cuisson avant d'être introduit dans la pièce.

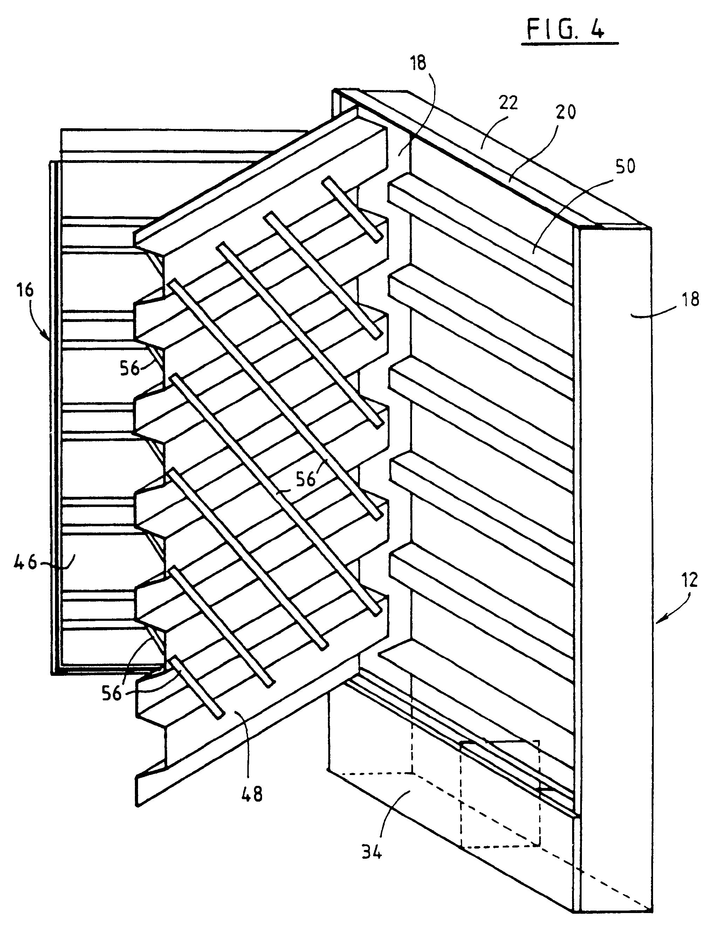

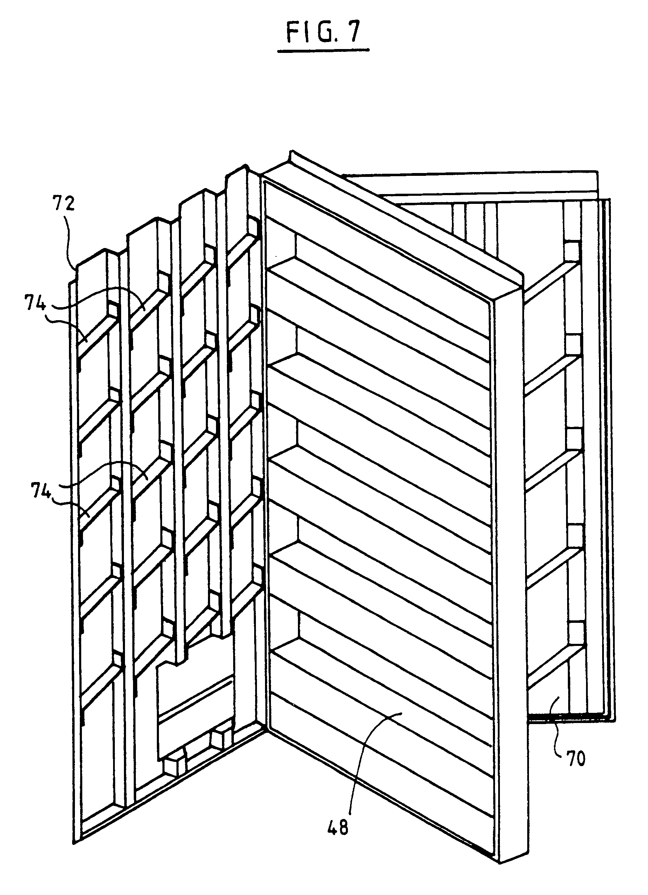

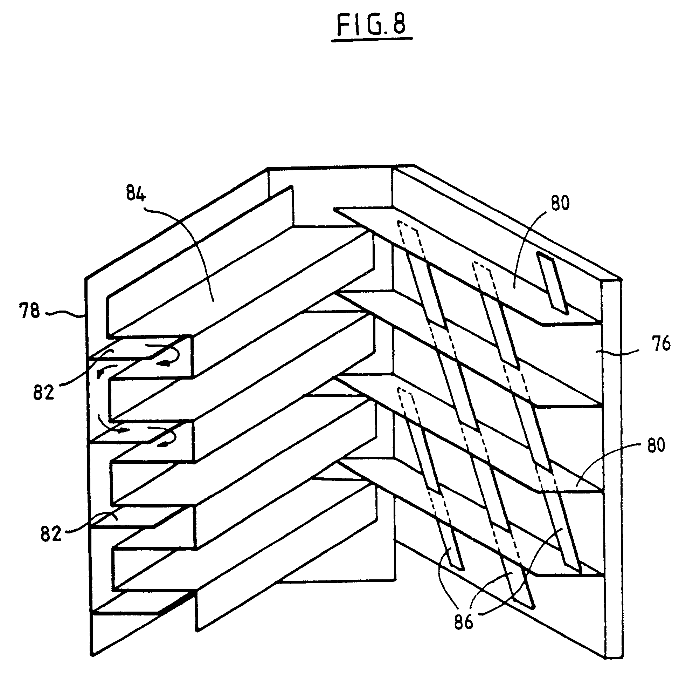

On a une représenté schématiquement en figure 10 variante de réalisation, particulièrement intéressante, de l'invention. Dans cette variante, l'unité de ventilation et de climatisation comprend une plaque ondulée 46 identique à celle de la figure 4, montée dans un cadre 100 pour former sa paroi avant, et une plaque ondulée 50, identique à celle de la figure 4, montée dans un cadre 102 pour former sa paroi arrière appliquée sur un mur. A la différence de la figure 4, la paroi intermédiaire est une plaque 104 à ondulations obliques ayant une section rectangulaire ou trapézoïdale, cette plaque étant montée dans un cadre 106. Lorsque l'unité est fermée, les sommets des ondulations obliques de la plaque 104 se trouvent au voisinage immédiat et au contact des sommets des ondulations horizontales des plaques 46 et 50 et délimitent donc des canaux de passage d'air ayant une forme particulièrement sinueuse.

Dans cette variante de réalisation, l'air extérieur circule entre les plaques 50 et 104, de bas en haut, et l'air intérieur circule entre les plaques 46 et 104, de haut en bas. Pour court-circuiter le passage de l'air intérieur dans l'unité, il suffit d'ouvrir légèrement la paroi avant de l'unité, formée par la plaque 46 et le cadre 100. De plus, les ventilateurs volumétriques peuvent être remplacés par des ventilateurs dynamiques de type axial, dont le nettoyage est plus facile et qui sont montés amoviblement dans les conduits 108, 110 traversant le mur.

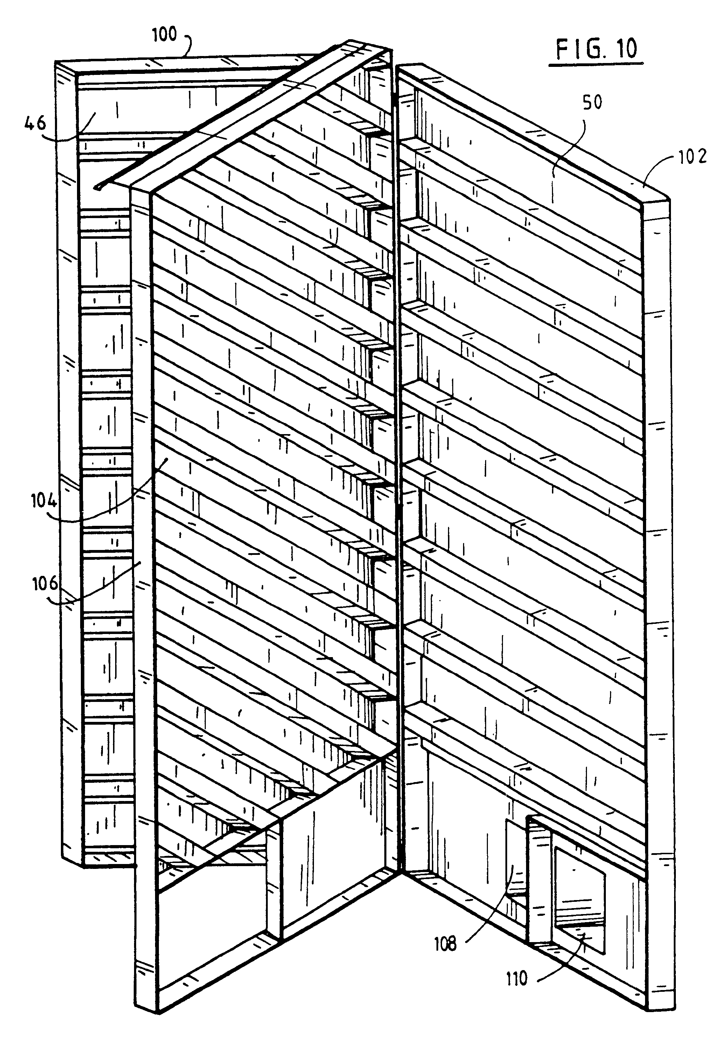

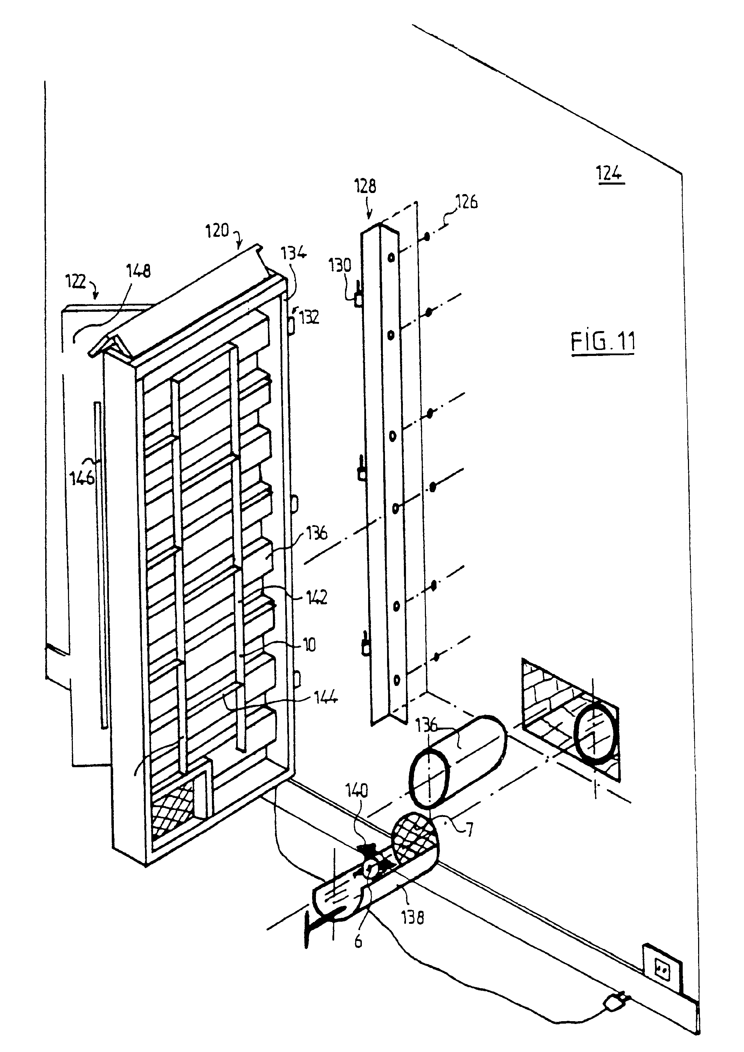

On se réfère maintenant à la figure 11 qui montre schématiquement en vue perspective une autre forme de réalisation de l'unité selon l'invention. Dans cette forme de réalisation, l'unité comprend deux panneaux ou parois respectivement 120 et 122 et non pas trois comme dans les formes de réalisation précédentes, le rôle de la troisième paroi étant joué par le mur 124. Contre ledit mur, est fixé par des vis schématisées en 126, un fer cornière vertical 128, sur lequel sont rapportés les éléments mâle de gonds 130 propres à coopérer avec les éléments femelle 132, lesquels sont fixés sur un cadre postérieur 134 du panneau 120. L'autre panneau, 122, est, de même, monté par l'intermédiaire de gonds, sur le bord antérieur du panneau 120 de manière à pouvoir s'ouvrir, légèrement ou complètement, par rapport audit panneau.

Le panneau 120 comprend une plaque ondulée 136 imposant le chemin ascendant ondulé ou sinueux à l'air d'entrée qui lui parvient par une gaine 136 traversant le mur 124 et dans laquelle est logé un ventilateur non représenté.

Comme dans les réalisations précédentes, l'air à évacuer suit un trajet descendant, également sinueux, dans l'intervalle ondulé ménagé entre le panneau 120 et le panneau 122, la plaque ondulée pouvant être ou bien fixée au premier panneau ou bien fixée au second panneau. L'air de la pièce s'échappe à la partie inférieure par une gaine 138 traversant le mur 124 et dans laquelle se trouve un ventilateur 140.

Des turbulateurs constitués par les réglettes verticales 142 et/ou horizontales 144 favorisent les échanges thermiques entre le flux d'air d'entrée et le flux d'air de sortie. De tels turbulateurs peuvent également être prévus dans le trajet effectué au flux de sortie. Un tel turbulisateur a été montré en 146, fixé sur la plaque 148 faisant partie du panneau 122.

Le montage et le démontage d'une telle unité sont particulièrement simples et rapides.

Le nettoyage des surfaces en contact avec l'air s'effectue facilement.

Suivant une modalité de fonctionnement, la plaque 148 faisant partie du panneau 122 est entr'ouverte.

Dans la forme de réalisation montrée sur la figure 11, la gaine 136 est scellée dans le mur, est cependant accessible pour qu'elle puisse y être lavée.

Par contre, la gaine 138 peut être facilement extraite du mur, avec son ventilateur, la grille et éventuellement la moustiquaire, ce démontage facilitant le nettoyage.

L'unité de ventilation et de climatisation selon l'invention est également applicable à la ventilation de locaux dans lesquels règne une atmosphère particulièrement humide.

En effet, l'air extérieur qui est introduit dans le local est séché lorsqu'il est réchauffé par échange de chaleur avec l'air extrait du local. On peut ainsi débarrasser un local ou une pièce de l'humidité qui y règne ou qui y est produite.

Il se révèle parfois nécessaire de prévoir des moyens d'humidification de l'air à la sortie du caisson, pour humidifier l'air extérieur qui est introduit dans une pièce. Ces moyens peuvent comprendre une réserve d'eau servant à humidifier une toile sur laquelle passe l'air qui va être introduit dans la pièce.

On peut également disposer ces moyens humidificateurs dans le passage de l'air qui est prélevé dans la pièce et qui va être rejeté à l'extérieur pour refroidir cet air à l'entrée du passage d'air, et ainsi refroidir davantage l'air qui va être introduit dans la pièce (cas d'un temps ou d'un climat chaud).

On peut également prévoir des moyens supplémentaires de chauffage de l'air qui va être introduit dans la pièce, par exemple, une résistance électrique ou analogue, ou bien des moyens de refroidissement de l'air, par exemple, à effet Peltier.

De façon générale, l'invention permet d'assurer la ventilation et la climatisation d'une pièce par de l'air extérieur qui, avant d'être introduit dans la pièce, est automatiquement chauffé ou refroidi selon les besoins et débarrassé de ses poussières ou analogues sans qu'il soit nécessaire d'utiliser un filtre d'un type classique. Par ailleurs, l'unité selon l'invention est d'installation et d'entretien très simples et commodes.

L'unité selon l'invention peut également être conçue de façon à ce que les passages de fluides soient étanches et peut alors être appliquée à la récupération de la chaleur des eaux domestiques usées, avant leur rejet à l'égout.

Un autre avantage important de l'invention est sa faible consommation d'énergie, les ventilateurs étant entraînés à vitesse lente et ayant, en outre, un fonctionnement particulièrement silencieux.

Les plaques dilimitant les passages d'air peuvent être réalisées en matière quelconque et peuvent comporter ou définir des ondulations horizontales, verticales ou obliques.

Dans toutes les réalisations, il est possible de faire pénétrer directement l'air de l'extérieur dans la pièce et/ou d'évacuer directement l'air de la pièce vers l'extérieur, de façon à éviter les échanges de chaleur.

**Revendications**

1. Unité indépendante d'échange de chaleur entre un fluide primaire et un fluide secondaire, en particulier de l'air pour la ventilation et la climatisation d'un local ou d'une pièce dans un bâtiment, comprenant un échangeur de chaleur traversé par le fluide primaire et par le fluide secondaire, et au moins un organe de circulation de fluide dans l'échangeur, dans laquelle l'échangeur se présente sous forme d'un caisson parallèlépipédique (12) comprenant des parois sensiblement parallèles dont l'une au moins est facilement amovible, ces parois délimitant entre elles deux passages de fluide (40, 42) sensiblement identiques dans lesquels circulent à contre-courant le fluide primaire et le fluide secondaire, ces passages de fluide ayant, en section, une forme ondulée, caractérisée en ce que les sections de passages de fluide dans l'échangeur sont telles que la vitesse de circulation du fluide y est faible et inférieure à environ 1 mètre par seconde en utilisation normale et en ce que chaque passage de fluide (40, 42) comprend des éléments allongés (56, 142, 144) générateurs de turbulences, disposés entre deux parois définissant le passage.

2. Unité selon la revendication 1, caractérisée en ce qu'elle comprend trois parois (46, 48, 50).

3. Unité selon la revendication 1, caractérisée en ce qu'elle comprend deux parois (120, 122), le rôle de la troisième paroi étant joué par le mur.

4. Unité selon l'une des revendications 1 à 3, caractérisée en ce que les passages de fluide (40, 42) de l'échangeur sont accessibles de l'extérieur sur sensiblement toute leur surface, en particulier pour leur nettoyage, grâce au fait que les parois précitées sont facilement amovibles ou montées à pivotement autour d'un de leurs côtés.

5. Unité selon l'une des revendications 1 à 4, caractérisée en ce que les éléments allongés (56, 142, 144) générateurs de turbulences s'étendent en travers des ondulations précitées.

6. Unité selon l'une des revendications 1 à 5, caractérisée en ce que chaque élément (56, 142, 144) générateur de turbulences est en contact avec les sommets d'au moins certaines des ondulations d'une paroi et d'au moins certaines des ondulations de l'autre paroi.

7. Unité selon l'une des revendications 1 à 6, caractérisée en ce que les éléments (56, 142, 144) générateurs de turbulences sont des barres plates rectilignes, disposées dans un même plan, parallèles entre elles et orientées en oblique par rapport à la direction générale de l'écoulement du fluide.

8. Unité selon l'une des revendications 5 à 7, caractérisée en ce que les éléments générateurs de turbulences sont fixés sur les sommets des ondulations de l'une (48) des parois précitées.

9. Unité selon l'une des revendications 5 à 7, caractérisée en ce que les éléments générateurs de turbulences (56) sont réunis entre eux par un cadre périphérique (65) monté à pivotement autour d'un de ses côtés.

10. Unité selon l'une des revendications précédentes, caractérisée en ce que les ondulations des passages de fluide (40, 42) sont parallèles entre elles et perpendiculaires à la direction générale d'écoulement du fluide.

11. Unité selon l'une des revendications 1 à 9, caractérisée en ce que chaque passage de fluide est formé entre une paroi (48, 104) à ondulations transversales ou obliques et une paroi (70, 72 ; 46, 50) à ondulations longitudinales ou transversales.

12. Unité selon l'une des revendications précédentes, caractérisée en ce que les parois des passages de fluide sont des plaques ondulées (46, 48, 50, 70, 72) et/ou des plaques planes (76, 78) présentant sur au moins une face une série de rebords (80, 82) parallèles entre eux et perpendiculaires à la plaque

13. Unité selon l'une des revendications précédentes, caractérisée en ce que les surfaces en regard des parois (46, 48, 50) délimitant les passages de fluide sont en une couleur augmentant l'échange de chaleur par rayonnement entre le fluide primaire et le fluide secondaire.

14. Unité selon l'une des revendications précédentes, caractérisée en ce que l'organe de circulation de fluide est un ventilateur volumétrique (36, 38, 140) à faible vitesse de rotation et à faible niveau sonore de fonctionnement.

15. Unité selon la revendication 14, caractérisée en ce que chaque passage de fluide (40, 42, comprend, à une extrêmité, un ventilateur (36, 38) du type précité.

16. Unité selon l'une des revendications 1 à 15, caractérisée en ce que le fluide primaire et le fluide secondaire circulant dans l'échangeur sont de l'air, l'air primaire étant par exemple aspiré dans la pièce ou le local et rejeté à l'extérieur, l'air secondaire étant aspiré à l'extérieur et introduit dans la pièce ou le local.

17. Unité selon la revendication 16, caractérisée en ce qu'elle est disposée contre la face interne d'un mur extérieur (10) de la pièce ou du local, les passages de fluide (40, 42) sont à orientation générale verticale et communiquent à leur extrémité supérieure avec l'intérieur de la pièce et, à leur extrémité inférieure, avec l'extérieur de la pièce ou du local par l'intermédiaire d'un conduit (26) traversant le mur (10).

18. Unité selon la revendication 17, caractérisée en ce qu'une couche (54) de matière thermiquement isolante est disposée entre le mur (10) de la pièce ou du local et la paroi correspondante (14) de l'échangeur et en ce qu'une couche (50) de matière isolante recouvre la face de la paroi (46) de l'échangeur qui est tournée vers l'intérieur de la pièce ou du local.

19. Unité selon l'une des revendications 16 à 18, caractérisée en ce que des moyens de chauffage, de refroidissement, de séchage ou d'humidification d'air sont prévus dans les passages d'air de l'unité.

20. Unité selon l'une des revendications ci-dessus, caractérisée en ce qu'elle comporte des moyens pour, à volonté, faire pénétrer directement l'air de l'extérieur dans la pièce et/ou évacuer directement l'air de la pièce vers l'extérieur.

**Ansprüche**

1. Unabhängige Wärmetauschereinheit für den Wärmeaustausch zwischen einem primären Fluid und einem sekundären Fluid, insbesondere Luft, zur Lüftung und Klimatisierung eines Raums oder eines Zimmers in einem Gebäude bestehend aus einem vom primären Fluid und vom sekundären Fluid durchströmten Wärmetauscher und mindestens einem Fluidumlaufelement im Wärmetauscher, bei der der Wärmetauscher die Gestalt eines parallelepipeden Kastens (12) mit im wesentlichen parallelen Wänden hat, von denen mindestens eine mit Leichtigkeit bewegt werden kann, wobei diese Wände zwei im wesentlichen identische Fluiddurchgänge (40, 42) zwischen sich eingrenzen, in denen das primäre Fluid und das sekundäre Fluid im Gegenstrom umläuft und die im Schnitt gewellt sind, dadurch gekennzeichnet, daß die Querschnitte der Fluiddurchgänge im Wärmetauscher so ausgelegt sind, daß die Fluidumlaufgeschwindigkeit dort gering ist und beinormalem Einsatz weniger als etwa 1 Meter pro Sekunde beträgt und daß jeder Fluiddurchgang (40, 42) längliche Verwirbelungselemente (56, 142, 144) umfaßt, die zwischen zwei den Durchgang begrenzenden Wänden angeordnet sind.

2. Einheit nach Anspruch 1, dadurch gekennzeichnet, daß sie drei Wände (46, 48, 50) umfaßt.

3. Einheit nach Anspruch 1, dadurch gekennzeichnet, daß sie zwei Wände (120, 122) umfaßt und die Mauer die Rolle der dritten Wand übernimmt.

4. Einheit nach einem der Ansprüche 1 bis 3, dadurch gekennzeichnet, daß die Fluiddurchgänge (40, 42) des Wärmetauschers dank der Tatsache, daß die vorgenannten Wände mit Leichtigkeit bewegt werden können oder so angeordnet sind, daß sie um eine ihrer Seiten schwenken können, im wesentlichen über ihre gesamte Oberfläche von außen her, besonders zwecks ihrer Reinigung, zugänglich sind.

5. Einheit nach einem der Ansprüche 1 bis 4, dadurch gekennzeichnet, daß sich die länglichen Verwirbelungselemente (56, 142, 144) quer über die vorgenannten Wellen erstrecken.

6. Einheit nach einem der Ansprüche 1 bis 5, dadurch gekennzeichnet, daß jedes Verwirbelungselement (56, 142, 144) mindestens einige der Wellenberge der einen Wand und mindestens einige der Wellenberge der anderen Wand berührt.

7. Einheit nach einem der Ansprüche 1 bis 6, dadurch gekennzeichnet, daß es sich bei den Verwirbelungselementen (56, 142, 144) um flache, geradlinige Stangen handelt, die in derselben Ebene angeordnet, zueinander parallel und schräg zur allgemeinen Fluidfließrichtung ausgerichtet sind.

8. Einheit nach einem der Ansprüche 5 bis 7, dadurch gekennzeichnet, daß die Verwirbelungselemente an den Wellenbergen der einen (48) der vorgenannten Wände befestigt sind.

9. Einheit nach einem der Ansprüche 5 bis 7, dadurch gekennzeichnet, daß die Verwirbelungselemente (56) durch einen Außenrahmen (65) untereinander verbunden sind, der so angebracht ist, daß er um eine seiner Seite schwenken kann.

10. Einheit nach einem der vorhergehenden Ansprüche, dadurch gekennzeichnet, daß die Wellen der Fluiddurchgänge (40, 42) zueinander parallel und senkrecht zur allgemeinen Fluidfließrichtung liegen.

11. Einheit nach einem der Ansprüche 1 bis 9, dadurch gekennzeichnet, daß jeder Fluiddurchgang zwischen einer Wand (48, 104) mit Quer- oder Schrägwellen und einer Wand (70, 72 ; 46, 50)mit Längs- oder Querwellen ausgebildet ist.

12. Einheit nach einem der vorhergehenden Ansprüche, dadurch gekennzeichnet, daß es sich bei den Fluiddurchgangswänden um gewellte Platten (46, 48, 50, 70, 72) und/oder um ebene Platten (76, 78) handelt, die auf mindestens einer Seite eine Reihe von zueinander parallelen und senkrecht zu der Platte stehenden Randleisten (80, 82) aufweisen.

13. Einheit nach einem der vorhergehenden Ansprüche, dadurch gekennzeichnet, daß die den die Fluiddurchgänge begrenzenden Wänden (46, 48, 50) gegenüberliegenden Flächen eine Farbe aufweisen, die den zwischen dem primären Fluid und dem sekundären Fluid durch Wärmestrahlung stattfindenden Wärmeaustausch erhöht.

14. Einheit nach einem der vorhergehenden Ansprüche, dadurch gekennzeichnet, daß es sich bei dem Fluidumlaufelement um einen volumetrischen Ventilator (36, 38, 140) mit niedriger Umdrehungsgeschwindigkeit und leisem Betriebsgeräusch handelt.

15. Einheit nach Anspruch 14, dadurch gekennzeichnet, daß jeder Fluiddurchgang (40, 42) an einem Ende einen Ventilator (36, 38) der vorgenannten Art aufweist.

16. Einheit nach einem der Ansprüche 1 bis 15, dadurch gekennzeichnet, daß es sich bei dem im Wärmetauscher umlaufenden primären Fluid und sekundären Fluid um Luft handelt, wobei die primäre Luft beispielsweise aus dem Zimmer oder Raum angesaugt und nach außen abgegeben wird, und die sekundäre Luft außen angesaugt und in das Zimmer oder den Raum eingeführt wird.

17. Einheit nach Anspruch 16, dadurch gekennzeichnet, daß sie an der Innenseite einer Außenmauer (10) des Zimmers oder Raums angeordnet ist und die Fluiddurchgänge (40, 42) allgemein senkrecht ausgerichtet sind und über eine durch die Mauer (10) gehende Leitung (26) mit ihrem oberen Ende mit dem Zimmerinneren und mit ihrem unteren Ende mit der Außenseite des Zimmers oder Raums in Verbindung stehen.

18. Einheit nach Anspruch 17, dadurch gekennzeichnet, daß zwischen der Mauer (10) des Zimmers oder Raums und der entsprechenden Wand (14) des Wärmetauschers eine Schicht (54) aus wärmeisolierendem Material angeordnet ist, und daß eine Schicht (50) aus Isolationsmaterial die Seite der Wand (46) des Wärmetauschers bedeckt, die dem Zimmer- oder Rauminnern zugewandt ist.

19. Einheit nach einem der Ansprüche 16 bis 18, dadurch gekennzeichnet, daß in den Luftdurchgängen der Einheit Mittel zur Erwärmung, Kühlung, Trocknung oder Befeuchtung der Luft vorgesehen sind.

20. Einheit nach einem der obengenannten Ansprüche, dadurch gekennzeichnet, daß sie Mittel umfaßt, die es nach Bedarf ermöglichen, die Luft direkt von außen in das Zimmer eindringen zu lassen und/oder die Luft direkt aus dem Zimmer nach außen abzuziehen.

## Claims

1. Independent unit for heat exchange between a primary fluid and a secondary fluid, in particular of the air for the ventilation and conditioning of premises or a room in a building, comprising a heat exchanger traversed by the primary fluid and by the secondary fluid, and at least one member for circulating fluid in the exchanger, in which unit the exchanger is in the form of a parallelepipedal box (12) comprising substantially parallel panels, at least one of which can be removed easily, these panels delimiting between them two substantially identical fluid passages (40, 42) in which the primary fluid and the secondary fluid circulate in countercurrent, these fluid passages having, in cross-section, a corrugated shape, characterised in that the cross-sections of fluid passages in the exchanger are such that the speed of circulation of the fluid therein is low and less than approximately 1 metre per second during normal use, and in that each fluid passage (40, 42) comprises turbulence-generating elongated elements (56, 142, 144) arranged between two panels defining the passage.

2. Unit according to Claim 1, characterised in that it comprises three panels (46, 48, 50).

3. Unit according to Claim 1, characterised in that in comprises two panels (120, 122), the roll of the third panel being performed by the wall.

4. Unit according to one of Claims 1 to 3, characterised in that the fluid passages (40, 42) of the exchanger are accessible from the outside over substantially their entire surface, in particular for their cleaning, by virtue of the fact that the abovementioned panels can be removed easily or are mounted so as to pivot about one of their sides.

5. Unit according to one of Claims 1 to 4, characterised in that the turbulence-generating elongated elements (56, 142, 144) extend transversely to the abovementioned corrugations.

6. Unit according to one of Claims 1 to 5, characterised in that each turbulence-generating element (56, 142, 144) is in contact with the tops of at least some of the corrugations of one panel and of at least some of the corrugations of the other panel.

7. Unit according to one of Claims 1 to 6, characterised in that the turbulence-generating elements (56, 142, 144) are rectilinear flat bars arranged in a same plane, mutually parallel and oriented obliquely with respect to the general direction of the flow of the fluid.

8. Unit according to one of Claims 5 to 7, characterised in that the turbulence-generating elements are fixed to the tops of the corrugations of one (48) of the abovementioned panels.

9. Unit according to one of Claims 5 to 7, characterised in that the turbulence-generating elements (56) are joined together by a peripheral frame (65) mounted so as to pivot about one of its sides.

10. Unit according to one of the preceding claims, characterised in that the corrugations of the fluid passages (40, 42) are mutually parallel and perpendicular to the general direction of flow of the fluid.

11. Unit according to one of Claims 1 to 9, characterised in that each fluid passage is formed between a panel (48, 104) with transverse or oblique corrugations and a panel (70, 72 ; 46, 50) with longitudinal or transverse corrugations.

12. Unit according to one of the preceding claims, characterised in that the panels of the fluid passages are corrugated plates (46, 48, 50, 70, 72) and/or plane plates (76, 78) having, on at least one face, a series of mutually parallel flanges (80, 82) perpendicular to the plate.

13. Unit according to one of the preceding claims, characterised in that the opposite surfaces of the panels (46, 48, 50) delimiting the fluid passages have a colour which increases the heat exchange by radiation between the primary fluid and the secondary fluid.

14. Unit according to one of the preceding claims, characterised in that the member for circulating the fluid is a volumetric fan (36, 38, 140) with a low speed of rotation and with a low operating sound level.

15. Unit according to Claim 14, characterised in that each fluid passage (40, 42) comprises, at one end, a fan (36, 38) of the abovementioned type.

16. Unit according to one of Claims 1 to 15, characterised in that the primary fluid and the secondary fluid circulating in the exchanger are air, the primary air being, for example, sucked in from the room or premises and discharged to the outside, and the secondary air being sucked in from the outside and introduced into the room or premises.

17. Unit according to Claim 16, characterised in that it is arranged against the inner face of an outside wall (10) of the room or premises, the fluid passages (40, 42) have a vertical general orientation and communicate, at their upper end, with the inside of the room and, at their lower end, with the outside of the room or premises via a duct (26) traversing the wall (10).

18. Unit according to Claim 17, characterised in that a layer (54) of thermally insulating material is arranged between the wall (10) of the room or premises and the corresponding panel (14) of the exchanger, and in that a layer (50) of insulating material covers the face of the panel (46) of the exchanger facing towards the inside of the room or premises.

19. Unit according to one of Claims 16 to 18, characterised in that means for heating, cooling, drying and humidifying air are provided in the air passages of the unit.

20. Unit according to one of the above claims, characterised in that it comprises means for, as desired, causing the air to enter the room directly from the outside and/or removing the air directly from the room to the outside.

## FIG.1

FIG. 3

FIG. 2

FIG. 4

FIG. 5

## FIG.6

## FIG.9

## FIG. 7

# FIG.8

FIG. 10

FIG.11